Europäisches Patentamt

European Patent Office

Office européen des brevets

(19)

(11) **EP 1 428 017 B1**

(12) **EUROPÄISCHE PATENTSCHRIFT**

| | |
|---|---|
| (45) Veröffentlichungstag und Bekanntmachung des Hinweises auf die Patenterteilung:<br>**30.11.2005 Patentblatt 2005/48** | (51) Int Cl.⁷: **G01N 25/00**, G01N 27/18 |
| (21) Anmeldenummer: 02758161.0 | (86) Internationale Anmeldenummer:<br>**PCT/DE2002/003130** |
| (22) Anmeldetag: **27.08.2002** | (87) Internationale Veröffentlichungsnummer:<br>**WO 2003/025557 (27.03.2003 Gazette 2003/13)** |

(54) **MIKROMECHANISCHER WÄRMELEITFÄHIGKEITSSENSOR MIT PORÖSER ABDECKUNG**

MICROMECHANICAL HEAT CONDUCTIVITY SENSOR HAVING A POROUS COVER

DETECTEUR MICROMECANIQUE A CONDUCTIVITE THERMIQUE PRESENTANT UN RECOUVREMENT POREUX

| | |
|---|---|
| (84) Benannte Vertragsstaaten:<br>**DE FR GB** | • **LORENZ, Gerd**<br>**72764 Reutlingen (DE)** |
| (30) Priorität: **12.09.2001 DE 10144873** | (56) Entgegenhaltungen:<br>**DE-A- 3 837 951        DE-C- 3 711 511**<br>**US-A- 5 535 614** |
| (43) Veröffentlichungstag der Anmeldung:<br>**16.06.2004 Patentblatt 2004/25** | • **PATENT ABSTRACTS OF JAPAN vol. 013, no. 482 (P-953), 2. November 1989 (1989-11-02) -& JP 01 193638 A (SHARP CORP), 3. August 1989 (1989-08-03)** |
| (73) Patentinhaber: **ROBERT BOSCH GMBH**<br>**70442 Stuttgart (DE)** | • **PATENT ABSTRACTS OF JAPAN vol. 1997, no. 05, 30. Mai 1997 (1997-05-30) -& JP 09 005278 A (GASTAR CORP;YAZAKI CORP), 10. Januar 1997 (1997-01-10)** |
| (72) Erfinder:<br>• **ARNDT, Michael**<br>**72762 Reutlingen (DE)** | |

**Beschreibung**

Die vorliegende Erfindung betrifft einen mikromechanischen Wärmeleitfähigkeitssensor. Insbesondere betrifft sie einen mikromechanischen Wärmeleitfähigkeitssensor, welcher eine durch Aussparung einer schlecht wärmeleitfähigen Grundplatte gebildete thermisch isolierte Membran, wenigstens ein auf der Membran aufgebrachtes Heizelement, wenigstens einen auf der Membran aufgebrachten temperaturabhängigen elektrischen Widerstand zur Messung der Temperatur der Membran ($T_M$), sowie wenigstens einen weiteren außerhalb der Membran auf der Grundplatte aufgebrachten temperaturabhängigen elektrischen Widerstand zur Messung der Umgebungstemperatur ($T_U$) umfasst. Ferner betrifft die Erfindung Verfahren zur Herstellung des erfindungsgemäßen Wärmeleitfähigkeitssensors, sowie dessen Verwendung.

Die Messung der Wärmeleitfähigkeit wird vielfach zur Analyse von Gasen, insbesondere der quantitativen Analyse zweikomponentiger Gasgemische eingesetzt.

Grundsätzlich gilt, dass die Wärmeleitfähigkeit eines Gases bzw. Gasgemisches mit der Masse der Gasmoleküle, ihrer Konzentration und der Temperatur variiert. Wird die (Misch-) Wärmeleitfähigkeit des Gases bzw. Gasgemisches bei bekannter Gastemperatur und bekannten Komponenten gemessen, so können über die Wärmeleitfähigkeit die Konzentrationen einzelner Komponenten des Gasgemisches genau bestimmt werden. Vor allem können die Konzentrationen von Wasserstoff ($H_2$) und Helium (He) im Gemisch mit anderen Gasen, wie beispielsweise Luft, Sauerstoff ($O_2$), Stickstoff ($N_2$), Ammoniak ($NH_3$), Argon (Ar), Kohlendioxid ($CO_2$), Kohlenmonoxid (CO), Chlor ($Cl_2$), Schwefelwasserstoff ($H_2S$), Methan ($CH_3$), Stickstoffmonoxid (NO), Distickstoffmonoxid ($N_2O$) und Wasserdampf ($H_2O$) gut gemessen werden, weil diese Gase im Vergleich zu den anderen Gasen ein besonders hohe Wärmeleitfähigkeit haben. So beträgt die Wärmeleitfähigkeit von Wasserstoff ($H_2$) $\lambda_{wasserstoff} = 0,84\ Wm^{-1}K^{-1}$ und Helium (He) ) $\lambda_{Helium} = 0.6\ Wm^{-1}K^{-1}$, während die Wärmeleitfähigkeit von Luft $\lambda_{Luft} = 0,012\ Wm^{-1}K^{-1}$ ungefähr um einen Faktor 5-7 kleiner ist.

Zur Messung der Wärmeleitfähigkeit wird ein Körper auf eine Temperatur $T_K$ gebracht, die höher ist als die Umgebungstemperatur $T_U$. Ein den Körper umgebendes Gas(-gemisch) befindet sich im allgemeinen auf Umgebungstemperatur. Wird beispielsweise die Temperaturdifferenz $\Delta T = T_K - T_U$ konstant gehalten, so ist die hierzu benötigte Heizleistung $P_H$ ein Maß für die Wärmeleitfähigkeit des umgebenden Gases bzw. Gasgemisches. Die Heizleistung $P_H$ ist direkt proportional zur konstant gehaltenen Temperaturdifferenz $\Delta T$, wobei sich die Proportionalitätskonstante aus dem Produkt der Wärmeleitfähigkeit $\lambda$ und einem von der Messvorrichtung abhängigen (konstanten) Geometriefaktor K ergibt. Dieser Zusammenhang ist in Gleichung (1) beschrieben:

$$P_H = K\ \lambda\ \Delta T \qquad (1)$$

worin $P_H$ die Heizleistung, $\Delta T$ die Temperaturdifferenz, K den Geometriefaktor und $\lambda$ die Wärmeleitfähigkeit bezeichnen.

Zur Bestimmung der Wärmeleitfähigkeit werden in letzter Zeit zunehmend mikromechanische Wärmeleitfähigkeitssensoren auf Siliziumbasis entwickelt. Im Gegensatz zu herkömmlichen Wärmeleitfähigkeitssensoren zeichnen sich diese Sensoren durch eine geringe Leistungsaufnahme aus, die im wesentlichen nicht größer ist, als die Leistungsaufnahme der zur Signalverarbeitung notwendigen Elektronik. Darüber hinaus verfügen die miniaturisierten Sensoren über kurze Ansprechzeiten (Zeitkonstanten), welche bei den herkömmlichen Sensoren im allgemeinen nur durch Inkaufnahme einer erzwungenen Beströmung mit dem Messgas, d. h. einer Strömungsabhängigkeit zu erzielen sind. Dies macht jedoch einen universellen Einsatz letztendlich unmöglich. Schließlich sind solche mikromechanischen Wärmeleitfähigkeitssensoren auf Siliziumbasis wirtschaftlich in der Herstellung, weil auf übliche Verfahren bei der Fertigung integrierter Halbleiterbauelemente zurückgegriffen werden kann.

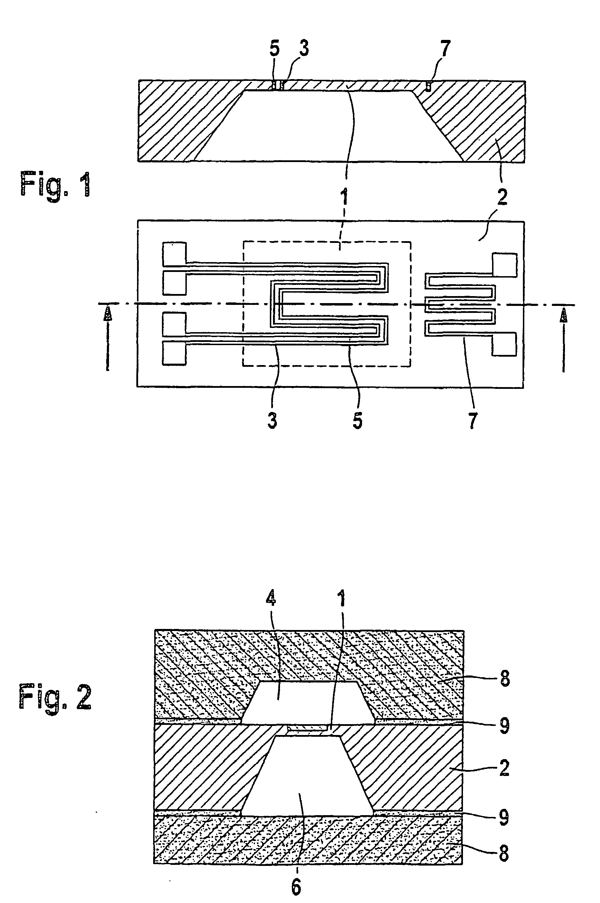

Der Aufbau eines typischen herkömmlichen mikromechanischen Wärmeleitfähigkeitssensors auf Siliziumbasis ist in Fig. 1 dargestellt und wird weiter unten diskutiert.

Ein grundsätzliches Problem bei der Messung der Wärmeleitfähigkeit eines umgebenden Gases ist der durch Konvektion des Gases bewirkte Wärmetransport mit einer damit einher gehenden Verfälschung des eigentlichen Wärmeleitfähigkeitswerts. Ein konvektiver Wärmetransport kann sich aus externen Gasbewegungen, die sich im Sensor bemerkbar machen, aber auch aus der zur Messung notwendigen Temperaturdifferenz zwischen Heizelement bzw. Membran und Gas ergeben.

Zwar kann eine erzwungene Beströmung des Wärmeleitfähigkeitssensors mit dem zu messenden Gas durchaus erwünscht sein um einen schnellen Gasaustausch und damit kurze Ansprechzeiten zu ermöglichen, jedoch wird bei mikromechanischen Wärmeleitfähigkeitssensoren mit sehr geringen Messvolumina und einem damit ermöglichten inherent schnellen Gasaustausch jeglicher konvektive Wärmetransport als nachteilig angesehen.

Um den konvektiven Wärmetransport zu unterbinden, wird der Sensor üblicherweise so eingesetzt, dass das Gasvolumen in der Nähe der Membran in Ruhe bleibt. Dies kann z. B. durch Abdecken der Membran mit eine Deckplatte erreicht werden.

Beispielsweise beschreibt die DE 37 115 11 C1 einen mikromechanischen Wärmeleitfähigkeitssensor zur Messung der Wärmeleitfähigkeit eines Gasgemisches, bei dem auf eine Trägerplatte aus Silizium eine Isolatorschicht aufgetragen ist, auf der durch Aufdampfen oder Sputtern mäanderförmige Dünnfilmwiderstände aufgebracht sind. Im Bereich der Dünnfilmwiderstände ist die Isolatorschicht unterätzt, so dass eine Grube in der Trägerplatte entsteht, die den unteren Teil der Messkammer des Sensors bildet. Auf der Trägerplatte mit den Dünnfilmwiderständen ruht eine Deckplatte aus Silizium, in die in Höhe der Dünnfilmwiderstände eine Grube eingeätzt ist, die den oberen Teil der Messkammer bildet. Die Deckplatte besitzt eine Öffnung, die als Diffusionskanal dem Gasgemisch den Zutritt zur Messkammer ermöglicht. Der Gasaustausch in der unteren Grube der Messkammer erfolgt durch Durchbrüche in der Isolatorschicht.

Nachteilig bei diesem Wärmeleitfähigkeitssensor ist, dass die Abmessungen des Diffusionskanals jedenfalls so zu wählen sind, dass zum einen durch eine große Öffnung das Gas in der Messkammer möglichst schnell durch Diffusion ausgetauscht wird, zum anderen aber Gasbewegungen, die außerhalb der Messkammer auftreten, nicht in die Messkammer übertragen werden, was eine kleine Öffnung verlangt. Diese Aufgabe kann jedoch nur als Kompromiß zwischen den beiden Anforderungen gelöst werden, wobei eine gegebene Auslegung des Diffusionskanals im allgemeinen keinen universellen Einsatz mehr ermöglicht.

Weitere Wärmeleitfähigkeitssensoren mit einer Abdeckung sind aus JP1193638, DE 3837951 und US 5535614 bekannt.

Aufgabe der vorliegenden Erfindung ist es, die Nachteile der im Stand der Technik bekannten mikromechanischen Wärmeleitfähigkeitssensoren zu überwinden. Insbesondere soll ein universell einsetzbarer Wärmeleitfähigkeitssensor angegeben werden, bei dem ein konvektiver Wärmetransport durch das zu messende Gas bzw. Gasgemisch weitestgehend vermieden wird.

Diese Aufgabe wird durch die kennzeichnenden Merkmale des Anspruchs 1 erfüllt. Vorteilhafte Ausgestaltungen der Erfindung sind durch die Merkmale der abhängigen Ansprüche angegeben.

Erfindungsgemäß wird ein mikromechanischen Wärmeleitfähigkeitssensor gezeigt, welcher eine durch Aussparung einer schlecht wärmeleitfähigen Grundplatte gebildete thermisch isolierte Membran, wenigstens ein auf der Membran aufgebrachtes Heizelement, wenigstens einen auf der Membran aufgebrachten temperaturabhängigen elektrischen Widerstand zur Messung der Temperatur der Membran, sowie wenigstens einen weiteren außerhalb der Membran auf der Grundplatte aufgebrachten temperaturabhängigen elektrischen Widerstand zur Messung der Umgebungstemperatur umfasst, wobei die Membran auf einer oder beiden ihrer Seiten von einer den Gasaustausch durch Diffusion ermöglichenden porösen Deckplatte abgedeckt ist, zwischen Membran und poröser Deckplatte eine Kavität ausgespart ist, die poröse Deckplatte auf der Grundplatte befestigt ist und die poröse Deckplatte aus einem porösen keramischen Material oder wenigstens teilweise aus porösem Silizium gefertigt ist. Der erfindungsgemäße Wärmeleitfähigkeitssensor kann also mit einer oder zwei porösen Deckplatten ausgestattet sein, d. h. eine oder zwei Kavitäten zwischen Membran und Deckplatte(n) aufweisen.

In vorteilhafter Weise wird durch die poröse(n) Deckplatte(n) eine Diffusion des umgebenden Gases bzw. Gasgemisches in die den Messraum bildende Kavität ermöglicht, ohne dass dabei das Messergebnis durch eine Konvektionsströmung des Gases verfälscht ist. Aufgrund der geringen Abmessung der Kavität(en), insbesondere durch deren geringe Höhe, wird der durch die Temperaturdifferenz zwischen Membran bzw. Heizelement und Deckplatte bewirkte konvektive Wärmetransport in Richtung einer Deckplatte wesentlich vermindert, so dass eine Konvektionsströmung des zu messenden Gases in einer Kavität insgesamt minimiert und im wesentlichen unterbunden wird. Die Ansprechzeit des Sensors wird durch den schnell stattfindenden Gasaustausch stark verringert. Ferner kann die Sensitivität des Sensors erhöht werden, weil durch die minimierte Konvektionsströmung des zu messenden Gases bzw. Gasgemisches die Möglichkeit besteht, eine relativ große Temperaturdifferenz zwischen Membran und Messgas einzusetzen. Darüber hinaus besteht die Möglichkeit den Sensor unabhängig von der Einbausituation universell einzusetzen.

Wie oben dargestellt, kann die poröse Deckplatte auf eine oder beide Seiten der (flächigen) Membran aufgebracht werden. Wird die poröse Deckplatte auf diejenige Seite der Grundplatte aufgebracht, welche die Aussparung zur Formung der Membran aufweist, bildet diese Aussparung nach Aufbringen der Deckplatte eine Kavität, die als Messraum für den Sensor verwendet wird. Wird die poröse Deckplatte auf die dieser Seite gegenüberliegende Seite der Grundplatte aufgebracht, so muss die poröse Deckplatte eine der Membran gegenüberliegend angeordnete Aussparung aufweisen, welche nach Aufbringen der Deckplatte eine Kavität bildet. Diese Kavität bildet dann einen Messraum für den Wärmeleitfähigkeitssensor. Der Sensor kann somit wahlweise über eine oder zwei Kavitäten (bzw. Messräume) für das zu messende Gas(-gemisch) verfügen.

Die Grundplatte ist vorzugsweise aus Silizium gefertigt. Dies hat den Vorteil, dass zu weiterer Bearbeitung auf die in der Halbleitertechnik eingesetzten Verfahren, wie beispielsweise Aufdampfverfahren, Sputterverfahren, photolithographische Verfahren, Ätzverfahren und Passivierungsverfahren zurückgegriffen werden kann. So ist eine kostengünstige Herstellung der Sensoren möglich. Insbesondere können aus einem einzigen Silizium-Wafer eine Vielzahl von erfindungsgemäßen Sensoren hergestellt werden.

Die poröse Deckplatte ist vorzugsweise aus

SiC und Al$_2$O$_3$ gefertigt.

Es ist bevorzugt, dass der thermische Ausdehnungskoeffizient des keramischen Materials dem thermischen Ausdehnungskoeffizienten von Silizium im wesentlichen gleich kommt, oder diesem zumindest benachbart ist. In diesem Fall haben Deckplatte(n) und Grundplatte bzw. Membran eine gleiche thermische Ausdehnung, wodurch in vorteilhafter Weise thermisch bedingte Spannungen nach Aufbringen der Deckplatte auf die Grundplatte vermieden bzw. minimiert werden können.

Die Dicke der zur Fertigung des Sensors verwendeten Grundplatte liegt vorzugsweise im Bereich von 200 - 600 μm, während die Membran vorzugsweise eine Dicke im Bereich von 0,6 - 2 μm aufweist. Ferner ist die Membran durch eine Fläche gekennzeichnet, die vorzugsweise im Bereich von 0,25 - 4 mm$^2$ liegt.

Werden die Poren des porösen Materials der Deckplatte ausreichend klein gewählt werden, kann das passierende Gas (-gemisch) in äußerst vorteilhafter Weise während der Diffusion gefiltert werden. Je nach Porengröße des porösen Materials können durch diese Filterung Fremdstoffe, beispielsweise Ruß- und Staubpartikel oder mikrobiologische Verunreinigungen, aus dem Gas(-gemisch) entfernt werden.

Das Heizelement und die temperaturabhängigen elektrischen Widerstände sind vorzugsweise aus Silber (Ag), Gold (Au), Nickel (Ni) oder Platin (Pt) gefertigt. Bei einer besonders vorteilhaften Ausgestaltung der Erfindung ist der Querschnitt des Heizelements im Bereich der Kontaktierung und in der Heizzone unterschiedlich groß. Dies kann vorteilhaft beim Aufsintern der Deckplatte auf die Grundplatte eingesetzt werden.

Die temperaturabhängigen elektrischen Widerstände bzw. das Heizelement können durch eine Passivierungsschicht gegen den Einfluss chemisch agressiver Gase bzw. Gasgemische geschützt werden. Als Substanzen für die Passivierungsschicht bieten sich vor allem Siliziumverbindung wie Siliziumoxid (SiO$_2$) und Siliziumnitrid (Si$_3$N$_4$) an.

Der erfindungsgemäße Wärmeleitfähigkeitssensor kann hergestellt werden, indem die poröse Deckplatte auf die Grundplatte geklebt wird. Eine Klebung von Grund- und Deckplatte bietet sich insbesondere dann an, wenn die verwendeten Materialien einen unterschiedlichen thermischen Ausdehnungskoeffizienten haben, da eine Klebeverbindung in der Lage ist, eine unterschiedliche thermische Ausdehnung auszugleichen. Dies vermeidet thermisch bedingte Spannungen in den verbundenen Materialien. Als Klebstoffe können insbesondere silbergefüllte Klebstoffe mit angepassten Wärmeausdehnungskoeffiziente verwendet werden.

Bei einem nur geringen Unterschied der thermischen Ausdehnungskoeffizienten zwischen der beispielsweise aus einem porösen keramischen Material bestehenden porösen Deckplatte und der Grundplatte ist auch eine direkte Umhüllung der Grundplatte mit Keramik durch Aufsintern möglich. Hierfür wird vor dem Aufbringen des zu sinternden Materials der porösen Deckplatte eine nach dem Sintern zu entfernende Abdeckschicht zur Bildung der Kavität in der porösen Deckplatte auf die Grundplatte aufgebracht.

Die für den Sinterprozess notwendige Wärme kann von außen zugeführt werden. Jedoch besteht auch die Möglichkeit, dass der Sinterprozess allein durch die Heizwärme des Heizelements bewirkt wird. In diesem Fall kann der Durchmesser des Heizelements, beispielsweise ein Platindraht, in der Heizzone wesentlich dicker als im Bereich seiner Kontaktierung sein. In besonders vorteilhafter Weise kann auch die Abdeckschicht durch die Heizwärme des Heizelements entfernt und so eine Kavität definierter Abmessungen gebildet werden.

Ferner kann der erfindungsgemäße Wärmeleitfähigkeitssensor unter Vermeidung des Fügeprozesses zwischen Grund- und Deckplatte monolithisch gefertigt werden. Hierfür wird eine Schicht aus porösem Silizium auf dem eigentlichen Sensorgrundmaterial aus Silizium erzeugt, wobei dies so erfolgt, dass zwischen der anschließend ausgebildeten Membran und der Schicht aus porösem Silizium eine Kavität ausgebildet wird.

Im folgenden werden unter Bezugnahme auf die beigefügten Zeichnungen mehrere Ausführungsbeispiele des erfindungsgemäßen Wärmeleitfähigkeitssensors, sowie Verfahren zu deren Herstellung dargestellt.

Fig. 1 zeigt den Aufbau eines herkömmlichen mikromechanischen Wärmeleitfähigkeitssensors jeweils in Draufsicht (unterer Teil) und im Querschnitt längs der angegebenen Schnittlinie (oberer Teil);

Fig. 2 zeigt eine Ausführungsform des erfindungsgemäßen Wärmeleitfähigkeitssensors, bei dem beiderseits der Membran eine poröse Deckplatte auf die Grundplatte aus Silizium aufgeklebt ist;

Fig. 3 zeigt eine weitere Ausführungsform des erfindungsgemäßen Wärmeleitfähigkeitssensors, bei dem beiderseits der Membran eine poröse Deckplatte auf die Grundplatte aus Silizium aufgesintert ist; und

Fig. 4 zeigt zwei weitere Ausführungsform des erfindungsgemäßen Wärmeleitfähigkeitssensors, bei dem beiderseits der Membran eine poröse Deckplatte aus Silizium auf die Grundplatte aus Silizium aufgesintert ist.

Wie aus dem unteren Teil von Fig. 1 erkennbar ist, werden bei einem typischen herkömmlichen mikromechanischen Wärmeleitfähigkeitssensor ein Heizelement 3 in Form eines Pt-Heizdrahtes und ein temperaturabhängiger elektrischer Widerstand 5 zur Erfassung der Temperatur der Membran T$_M$ mäanderförmig auf der Grundplatte 2 bzw. der Membran 1 aus Silizium angeordnet. Außerhalb der Membran 1 befindet sich ein weiterer temperaturabhängiger elektrischer Widerstand 16 zur Erfassung der Umgebungstemperatur $T_U$. Die Grundplatte 2 bildet zusammen mit den aufgebrachten elektrischen Strukturen einen Siliziumsensorchip zur Messung der Wärmeleitfähigkeit. Im oberen Teil von Fig. 1 ist zu erkennen, dass die Membran 1 als Aussparung der Grundplatte 2 ausgebildet ist.

Zur Messung der Wärmeleitfähigkeit des umgebenden Gases bzw. Gasgemisches wird beispielsweise die zur Konstanthaltung der Differenz zwischen $T_M$ und $T_U$ benötigte Heizleistung des Heizelements bestimmt. Aufgrund der geringen Masse der dünnen Membran und der darauf aufgebrachten Materialien, können sehr geringe thermische Zeitkonstanten erreicht werden, die üblicherweise in der Größenordnung von Millisekunden und darunter liegen. Darüber hinaus ist wegen der dünnen Membran die Wärmeableitung über das umgebende Gas wesentlich größer als über das Membranmaterial selbst, wodurch eine große Empfindlichkeit des Sensors gegenüber Änderungen der Wärmeleitfähigkeit des umgebenden Gases resultiert. Die hohe Empfindlichkeit des Sensors eröffnet auch die Möglichkeit die Wärmeableitung insgesamt zu vermindern, d. h. die Temperaturdifferenz $\Delta T$ zwischen Membran und Umgebung abzusenken, was sich in einer Verminderung der elektrischen Verlustleistung des Sensors widerspiegelt.

In Fig. 2 ist eine Ausführungsform des erfindungsgemäßen Wärmeleitfähigkeitssensors dargestellt. Auf beiden Seiten des Siliziumsensorchips, der sich aus der Grundplatte 2 mit den aufgebrachten stromleitenden Strukturen 3, 5 zusammensetzt, ist eine Deckplatte 8 aus porösem Keramik aufgebracht. Die Aussparung der Grundplatte 2 bildet zusammen mit der Deckplatte 8 eine Kavität 6, die als Messraum für den Sensor eingesetzt wird. Auf der anderen Seite der Membran 1 ist eine Aussparung in der Deckplatte 8 ausgebildet, die nach Aufbringen der Deckplatte 8 auf die Grundplatte 2 eine Kavität 4 formt, die als weiterer Messraum für den Sensor dient. Die beiden Deckplatten 8 sind jeweils auf den Siliziumsensorchip aufgeklebt. Die Klebeschichten 9 sind geeignet, etwaige Differenzen in den thermischen Ausdehnung der keramischen Deckplatten 8 und des Siliziumsensorchips auszugleichen.

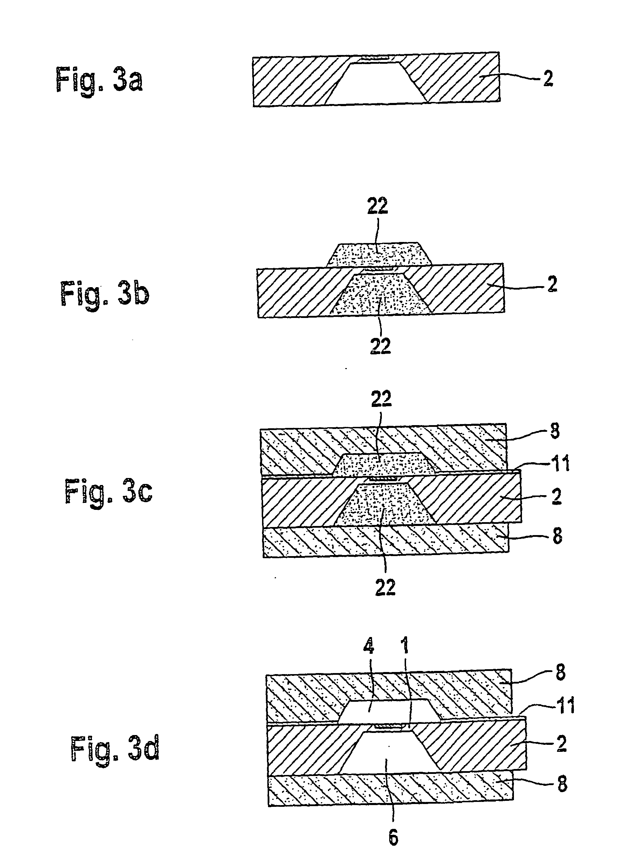

Fig. 3 zeigt eine weitere Ausführungsform des erfindungsgemäßen Wärmeleitfähigkeitssensors. Hierbei ist beiderseits der Membran 1 eine Deckplatte aus porösem keramischen Material auf den Siliziumsensorchip aufgesintert. Das Aufsintern der Deckplatten 8 ist wegen der fehlenden Möglichkeit unterschiedliche thermische Ausdehnungen zwischen Deckplatten und Siliziumsensorchip auszugleichen, nur bei sehr ähnlichen bzw. gleichem thermischen Ausdehnungskoeffizienten des keramischen Materials der Deckplatten und des Siliziumsensorchips angebracht. Vor dem Aufbringen einer Paste oder Dispersion des keramischen Materials für die Deckplatten 8 auf den Siliziumsensorchip wird im Bereich des Heizelements 3 und/oder der Membran 1 eine Abdeckschicht 22 aufgebracht, die nach dem Sintern des Keramikmaterials entfernt wird. An der Stelle der vorherigen Abdeckschicht 22 bleiben die Kavitäten 4, 6 übrig.

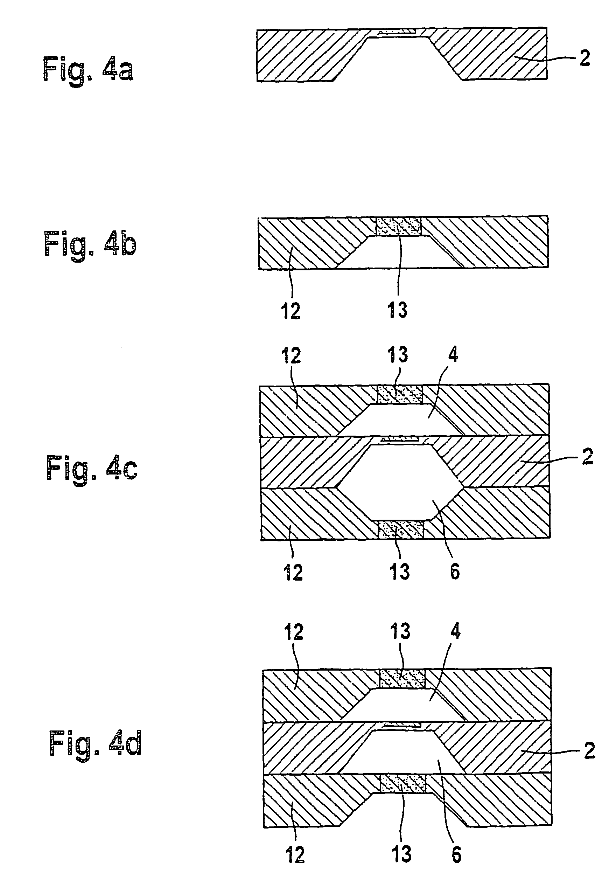

Diese Fertigungsfolge ist in Fig. 3 veranschaulicht. Fig. 3a) zeigt den Siliziumsensorchip 2. Fig. 3b) zeigt den Siliziumsensorchip 2 mit aufgebrachter Abdeckschicht 22. Fig. 3c) zeigt den Siliziumsensorchip 2 mit aufgebrachter Abdeck-schicht 22, sowie dem beiderseits des Siliziumsensorchips aufgebrachten keramischen Material der Deckplatten 8. Fig. 4d), schließlich, zeigt die nach den Sintern und Entfernen der Abdeckschicht 22 entstandenen Kavitäten 4, 6.

Sowohl das Sintern des keramischen Materials der Deckplatten 8, wie auch das Entfernen der Abdeckschicht 22 kann durch die Heizwärme des Pt-Heizdrahtes 3 bewirkt werden. Hiefür besteht die Abdeckschicht aus einem weniger hitzebeständigen, beispielsweise organischen (Opfer-)Material. Über die Schichtdicke dieses während des Sinterprozesses zerfallenden Materials kann eine definierte Kavität zwischen Pt-Heizdraht und poröser Keramikumhüllung erstellt werden. Der Pt-Heizdraht 3 weist hierfür einen unterschiedlichen Querschnitt für die Kontaktierung und im Bereich der Heizzone auf. Zur elektrischen Kontaktierung ist eine Bond-Verbindung 11 auf dem Siliziumsensorchip 2 aufgebracht.

Fig. 4 zeigt zwei weitere Ausführungsformen des erfindungsgemäßen Wärmeleitfähigkeitssensors. Bei diesen Ausführungsformen wird anstelle einer porösen Keramik für die Deckplatten 8 poröses Silizium verwendet. Wegen des gleichen thermischen Ausdehnungskoeffizienten von Deckplatten und Siliziumsensorchip werden thermisch bedingte Materialspannungen von vorneherein vermieden.

Fig. 4a) zeigt den Siliziumsensorchip 2. In Fig. 4b) ist ein Siliziumwafer 12 mit einem porösen Bereich 13 dargestellt, wobei der Siliziumwafer 12 im porösen Bereich 13 eine Aussparung aufweist. Der Siliziumwafer 12 wird beiderseits der Membran 1 auf den Siliziumsensorchip 2 gefügt, wobei der poröse Bereich 13 jeweils über der Membran 1 zu liegen kommt.

Fig. 4c) zeigt eine Variante, bei der der Siliziumwafer 12 auf der Seite der Membran 1, auf der sich die Aussparung des Siliziumsensorchips 2 befindet, so angeordnet ist, dass die Kavitäten des Siliziumwafers 12 und des Siliziumsensor chips 2 eine gemeinsame Kavität mit größeren Volumen bilden.

Fig. 4d) zeigt eine weitere Variante, bei der der Siliziumwafer 12 auf der Seite der Membran 1, auf der sich die Aussparung des Siliziumsensorchips 2 befindet, so angeordnet ist, dass die Kavität des Siliziumsensorchips 2 unverändert bleibt. Die Anordnung des Siliziumwafers 12 auf der jeweils gegenüberliegenden Membranseite ist bei beiden Varianten der Fig. 4c) und 4d) gleich.

Bei einer besonders vorteilhaften Abwandlung der beiden oben genannten Varianten kann der aufwändige Fügevorgang vermieden werden, indem bereits auf dem Sensorchip 2 eine Schicht aus porösem Silizium erzeugt wird, wobei zwischen der Membran 1 und der porösen Siliziumschicht eine Kavität ausgebildet ist. Auf diese Weise entsteht ein monolithischer Wärmeleitfähigkeitssensor.

Der erfindungsgemäße mikromechanische Wärmeleitfähigkeitssen-sors wird in vorteilhafter Weise zur Analyse von Gasen und Gasgemischen eingesetzt, wobei diese insbesondere bezüglich ihrer Art und Konzentration analysiert werden. Hierbei eignen sich vor allem binäre Gasgemische für eine quantitative Analyse. Wegen ihrer vergleichsweise hohen Wärmeleitfähigkeit können Wasserstoffgas ($H_2$) und Helium (He) einfach und schnell analysiert werden.

Bezugszeichenliste

1 Membran
2 Grundplatte
3 Heizelement
4 Kavität
5 temperaturabhängiger elektrischer Widerstand zur Erfassung der Membrantemperatur
6 Kavität
7 temperaturabhängiger elektrischer Widerstand zur Erfassung der Umgebungstemperatur
8 poröse Deckplatte
9 Klebeschicht
10 Abdeckschicht
11 Bond-Verbindung
12 Siliziumwafer mit porösem Bereich
13 pöröser Bereich des Siliziumwafers

**Patentansprüche**

1. Mikromechanischer Wärmeleitfähigkeitssensor, welcher eine durch Aussparung einer schlecht wärmeleitfähigen Grundplatte (2) gebildete thermisch isolierte Membran (1), wenigstens ein auf der Membran (1) aufgebrachtes Heizelement (3), wenigstens einen auf der Membran aufgebrachten temperaturabhängigen elektrischen Widerstand (5) zur Messung der Temperatur der Membran (TK), sowie wenigstens einen weiteren außerhalb der Membran auf der Grundplatte aufgebrachten temperaturabhängigen elektrischen Widerstand (7) zur Messung der Umgebungstemperatur (TU) umfasst, wobei die Membran (1) auf einer oder beiden ihrer Seiten von einer den Gasaustausch durch Diffusion ermöglichenden porösen Deckplatte (8) abgedeckt ist, zwischen Membran (1) und poröser Deckplatte (8) eine Kavität (4, 6) ausgespart ist, die poröse Deckplatte (8) auf der Grundplatte befestigt ist und die poröse Deckplatte (8) aus einem porösen keramischen Material oder wenigstens teilweise aus porösem Silizium gefertigt ist.

2. Mikromechanischer Wärmeleitfähigkeitssensor nach Anspruch 1, **dadurch gekennzeichnet, dass** die poröse Deckplatte (8) eine die Kavität bildende Aussparung (4) aufweist.

3. Mikromechanischer Wärmeleitfähigkeitssensor nach Anspruch 1 oder 2, **dadurch gekennzeichnet, dass** die Grundplatte (2) aus Silizium gefertigt ist.

4. Mikromechanischer Wärmeleitfähigkeitssensor nach einem der vorhergehenden Ansprüche, **dadurch gekennzeichnet, dass** die poröse Deckplatte (8) aus SiC und Al2O3 gefertigt ist.

5. Mikromechanischer Wärmeleitfähigkeitssensor nach Anspruch 4, **dadurch gekennzeichnet, dass** der thermische Ausdehnungskoeffizient des keramischen Materials dem thermischen Ausdehnungskoeffizienten von Silizium im wesentlichen gleich oder ähnlich ist.

6. Mikromechanischer Wärmeleitfähigkeitssensor nach einem der vorhergehenden Ansprüche, **dadurch gekennzeichnet, dass** die Membran (1) eine Fläche im Bereich von 0,25 - 2 µm aufweist.

7. Mikromechanischer Wärmeleitfähigkeitssensor nach einem der vorhergehenden Ansprüche, **dadurch gekennzeichnet, dass** die Membran (1) eine Dicke im Bereich von 0,6 - 2 µm aufweist.

8. Mikromechanischer Wärmeleitfähigkeitssensor nach einem der vorhergehenden Ansprüche, **dadurch gekennzeichnet, dass** die Aussparung der porösen Deckplatte (8) eine Tiefe im Bereich von 0,1 - 2 mm aufweist.

9. Mikromechanischer Wärmeleitfähigkeitssensor nach einem der vorhergehenden Ansprüche, **dadurch gekennzeichnet, dass** durch die poröse Deckplatte (8) eine Filterung des umgebenden Gases bzw. Gasgemisches erfolgt.

10. Mikromechanischer Wärmeleitfähigkeitssensor nach einem der vorhergehenden Ansprüche, **dadurch gekennzeichnet, dass** das Heizelement (3) und die temperaturabhängigen elektrischen Widerstände (5, 7) aus Silber (Ag), Gold (Au), Nickel (Ni) oder Platin (Pt) gefertigt sind.

11. Mikromechanischer Wärmeleitfähigkeitssensor nach einem der vorhergehenden Ansprüche, **dadurch gekennzeichnet, dass** das Heizelement (3) einen unterschiedlichen Querschnitt für die Kontaktierung und im Bereich der Heizzone aufweist.

12. Mikromechanischer Wärmeleitfähigkeitssensor nach einem der vorhergehenden Ansprüche, **dadurch gekennzeichnet, dass** die temperaturabhängigen elektrischen Widerstände (5, 7) durch eine Passivierungsschicht, insbesondere eine Siliziumverbindung wie Siliziumoxid ($SiO_2$) und Siliziumnitrid ($Si_3N_4$), gegen den Einfluss chemisch agressiver Gase bzw. Gasgemische geschützt sind.

13. Verfahren zur Herstellung des mikromechanischer Wärmeleitfähigkeitssensors nach einem der Ansprüche 1-12, **dadurch gekennzeichnet, dass** die poröse Deckplatte (8) auf die Grundplatte (2) geklebt wird.

14. Verfahren zur Herstellung des mikromechanischer Wärmeleitfähigkeitssensors nach einem der Ansprüche 1-12, **dadurch gekennzeichnet, dass** die poröse Deckplatte (8) auf die Grundplatte (2) gesintert wird.

15. Verfahren nach Anspruch 14, **dadurch gekennzeichnet, dass** vor dem Aufbringen des zu sinternden Materials der porösen Deckplatte (8) eine nach dem Sintern zu entfernende Abdeckschicht (10) auf die Grundplatte (2) aufgebracht wird.

16. Verfahren nach Anspruch 14 oder 15, **dadurch gekennzeichnet, dass** die zum Sintern nötige Wärme durch das Heizelement (3) erzeugt wird.

17. Verfahren nach Anspruch 15 und 16, **dadurch gekennzeichnet, dass** die Abdeckschicht (10) durch die Heizwärme des Heizelemements (3) entfernt wird.

18. Verfahren zur Herstellung des mikromechanischer Wärmeleitfähigkeitssensors nach einem der Ansprüche 1-12, **dadurch gekennzeichnet, dass** der Wärmeleitfähigkeitssensor monolithisch gefertigt wird, indem auf der Grundplatte eine Schicht aus porösem Silizium, eine der Schicht aus porösem Silizium angrenzende Membran, sowie eine zwischen der Schicht aus porösem Silizium und der Membran angeordnete Kavität erzeugt wird.

19. Verwendung des mikromechanischer Wärmeleitfähigkeitssensors nach einem der Ansprüche 1-12 zur Analyse, insbesondere quantitativen Analyse, von Gasen und Gasgemischen.

20. Verwendung des mikromechanischer Wärmeleitfähigkeitssensors nach Anspruch 19 zur Analyse eines Wasserstoffgas ($H_2$) und/oder Helium (He) enthaltenden Gasgemisches.

**Claims**

1. Micromechanical thermal conductivity sensor, which has a thermally insulated membrane (1) which is formed by a cut out in a poorly thermally conductive baseplate (2), at least one heating element (3) which is fitted on the membrane (1), at least one temperature-dependent electrical resistor (5) which is fitted on the membrane in order to measure the temperature of the membrane (TK), as well as at least one further temperature-dependent electrical resistor (7) which is fitted on the baseplate away from the membrane in order to measure the ambient temperature (TU), with the membrane (1) being covered on one or both of its faces by a porous covering plate (8) which allows gas exchange by diffusion, with a cavity (4, 6) being cut out between the membrane (1) and the porous covering plate (8), the porous covering plate (8) being mounted on the baseplate, and the porous covering plate (8) being manufactured from a porous ceramic material, or at least partially from porous silicon.

2. Micromechanical thermal conductivity sensor according to Claim 1, **characterized in that** the porous covering plate (8) has a cutout (4) which forms the cavity.

3. Micromechanical thermal conductivity sensor according to Claim 1 or 2, **characterized in that** the baseplate (2) is manufactured from silicon.

4. Micromechanical thermal conductivity sensor according to one of the preceding claims, **characterized in that** the porous covering plate (8) is manufactured from SiC or A1203.

5. Micromechanical thermal conductivity sensor according to Claim 4, **characterized in that** the thermal coefficient of expansion of the ceramic material is essentially the same as or similar to the thermal coefficient of expansion of silicon.

6. Micromechanical thermal conductivity sensor according to one of the preceding claims, **characterized in that** the membrane (1) has a surface in the region of 0.25 to 2 μm.

7. Micromechanical thermal conductivity sensor according to one of the preceding claims, **characterized in that** the membrane (1) has a thickness in the range from 0.6 to 2 μm.

8. Micromechanical thermal conductivity sensor according to one of the preceding claims, **characterized in that** the cutout in the porous covering plate (8) has a depth in the range from 0.1 to 2 mm.

9. Micromechanical thermal conductivity sensor according to one of the preceding claims, **characterized in that** the porous covering plate (8) provides filtering for the surrounding gas or gas mixture.

10. Micromechanical thermal conductivity sensor according to one of the preceding claims, **characterized in that** the heating element (3) and the temperature-dependent electrical resistors (5, 7) are manufactured from silver (Ag), gold (Au), nickel (Ni) or platinum (Pt).

11. Micromechanical thermal conductivity sensor according to one of the preceding claims, **characterized in that** the heating element (3) has a different cross section for making contact and in the area of the heating zone.

12. Micromechanical thermal conductivity sensor according to one of the preceding claims, **characterized in that** the temperature-dependent electrical resistors (5, 7) are protected against the influence of chemically aggressive gases or gas mixtures by means of a passivation layer, in particular a silicon compound such as silicon oxide ($SiO_2$) and silicon nitride ($Si_3N_4$).

13. Method for production of the micromechanical thermal conductivity sensor according to one of Claims 1-12, **characterized in that** the porous covering plate (8) is adhesively bonded to the baseplate (2).

14. Method for production of the micromechanical thermal conductivity sensor according to one of Claims 1-12, **characterized in that** the porous covering plate (8) is sintered to the baseplate (2).

15. Method according to Claim 14, **characterized in that** a covering layer (10), which can be removed after sintering, is applied to the baseplate (2) before the application of the material of the porous covering plate (8) to be sintered.

16. Method according to Claim 14 or 15, **characterized in that** the heat which is required for sintering is produced by the heating element (3).

17. Method according to Claims 15 and 16, **characterized in that** the covering layer (10) is removed by the heat produced by the heating element (3).

18. Method for production of the micromechanical thermal conductivity sensor according to one of Claims 1-12, **characterized in that** the thermal conductivity sensor is manufactured monolithically by producing a layer of porous silicon, a membrane adjacent to the layer of porous silicon, as well as a cavity which is arranged between the layer of porous silicon and the membrane, on the baseplate.

19. Use of the micromechanical thermal conductivity sensor according to one of Claims 1-12 for analysis, in particular quantitative analysis, of gases and gas mixtures.

20. Use of the micromechanical thermal conductivity sensor according to Claim 19 for analysis of a gas mixture which contains hydrogen gas ($H_2$) and/or helium (He).

## Revendications

1. Détecteur micromécanique à conductivité thermique comprenant une membrane (1) thermiquement isolée formée par l'évidement d'une plaque de base (2) à faible conductivité thermique, au moins un élément chauffant (3) disposé sur la membrane (1), au moins une résistance électrique sensible à la température (5) disposée sur la membrane (1) et permettant de mesurer la température de la membrane (TK), ainsi qu'au moins une autre résistance électrique sensible à la température (7) disposée sur la plaque de base en dehors de la membrane et permettant de mesurer la température ambiante (TU), la membrane (1) étant recouverte, sur l'une ou sur ses deux faces, d'une plaque poreuse de couverture (8) permettant l'échange gazeux par diffusion, une cavité (4, 6) est ménagée entre la membrane (1) et la plaque poreuse de couverture (8), la plaque poreuse de couverture (8) fixée sur la plaque de base étant fabriquée dans un matériau céramique poreux ou au moins partiellement en silicium poreux.

2. Détecteur micromécanique à conductivité thermique selon la revendication 1,
**caractérisé en ce que**
la plaque poreuse de couverture (8) présente un évidement (4) formant la cavité.

3. Détecteur micromécanique à conductivité thermique selon la revendication 1 ou 2,
**caractérisé en ce que**
la plaque de base (2) est fabriquée en silicium.

4. Détecteur micromécanique à conductivité thermique selon l'une des revendications précédentes,
**caractérisé en ce que**
la plaque poreuse de couverture (8) est fabriquée en SiC et $Al_2O_3$.

5. Détecteur micromécanique à conductivité thermique selon la revendication 4,
**caractérisé en ce que**
le coefficient de dilatation thermique du matériau céramique est essentiellement égal ou similaire au coefficient de dilatation thermique du silicium.

6.  Détecteur micromécanique à conductivité thermique selon l'une des revendications précédentes, **caractérisé en ce que**
    la membrane (1) présente une surface située dans la plage allant de 0,25 à 2 $\mu$m.

7.  Détecteur micromécanique à conductivité thermique selon l'une des revendications précédentes, **caractérisé en ce que**
    la membrane (1) présente une épaisseur située dans la plage allant de 0,6 à 2 $\mu$m.

8.  Détecteur micromécanique à conductivité thermique selon l'une des revendications précédentes, **caractérisé en ce que**
    l'évidement de la plaque poreuse de couverture (8) présente une profondeur située dans la plage allant de 0,1 à 2 mm.

9.  Détecteur micromécanique à conductivité thermique selon l'une des revendications précédentes, **caractérisé en ce que**
    la plaque poreuse de couverture (8) permette la filtration du gaz ou mélange gazeux environnant.

10. Détecteur micromécanique à conductivité thermique selon l'une des revendications précédentes, **caractérisé en ce que**
    l'élément chauffant (3) et les résistances électriques sensibles à la température (5, 7) sont fabriqués en argent (Ag), or (Au), nickel (Ni) ou platine (Pt).

11. Détecteur micromécanique à conductivité thermique selon l'une des revendications précédentes, **caractérisé en ce que**
    l'élément chauffant (3) présente une section transversale différente dans la zone de mise en contact et à proximité de la zone de chauffage.

12. Détecteur micromécanique à conductivité thermique selon l'une des revendications précédentes, **caractérisé en ce que**
    les résistances électriques sensibles à la température (5, 7) sont protégées par une couche de passivation, consistant notamment en un composé de silicium tel que l'oxyde de silicium ($SiO_2$) et le nitrure de silicium ($Si_3N_4$), contre l'action des gaz ou mélanges gazeux chimiques agressifs.

13. Procédé de fabrication du détecteur micromécanique à conductivité thermique selon l'une des revendications 1 à 12, **caractérisé en ce que**
    la plaque poreuse de couverture (8) est collée sur la plaque de base (2).

14. Procédé de fabrication du détecteur micromécanique à conductivité thermique selon l'une des revendications 1 à 12, **caractérisé en ce que**
    la plaque poreuse de couverture (8) est frittée sur la plaque de base (2).

15. Procédé selon la revendication 14, **caractérisé en ce que**
    préalablement à l'application du matériau à fritter de la plaque poreuse de couverture (8), on applique sur la plaque de base (2) une couche de recouvrement (10) à éliminer après le frittage.

16. Procédé selon la revendication 14 ou 15, **caractérisé en ce que**
    la chaleur requise pour le frittage est produite par l'élément de chauffage (3).

17. Procédé selon les revendications 15 et 16, **caractérisé en ce que**
    la couche de recouvrement (10) est éliminée par la chaleur de chauffage de l'élément de chauffage (3).

18. Procédé de fabrication du détecteur micromécanique à conductivité thermique selon l'une des revendications 1 à 12, **caractérisé en ce que**
    le détecteur à conductivité thermique est de conception monolithique et produit, sur la plaque de base, une couche de silicium poreux, une membrane adjacente à la couche de silicium poreux et une cavité ménagée entre la couche de silicium poreux et la membrane.

19. Utilisation du détecteur micromécanique à conductivité thermique selon l'une des revendications 1 à 12 pour l'analyse, notamment l'analyse quantitative, de gaz et de mélanges gazeux.

20. Utilisation du détecteur micromécanique à conductivité thermique selon la revendication 19, pour l'analyse d'un mélange gazeux renfermant de l'hydrogène ($H_2$) et/ou de l'hélium (He).

Fig. 1

Fig. 2

Fig. 3a

Fig. 3b

Fig. 3c

Fig. 3d

Fig. 4a

Fig. 4b

12    13

Fig. 4c

12    13    4

2

12    13    6

Fig. 4d

12    13    4

2

12    13    6